# EUROPÄISCHE PATENTSCHRIFT

(11) **EP 2 221 178 B1**
(45) Veröffentlichungstag und Bekanntmachung des Hinweises auf die Patenterteilung: **28.10.2015**
(21) Anmeldenummer: 09153491.7
(22) Anmeldetag: 24.02.2009
(51) Int. Cl.: B41F 13/004, B41F 33/00, G05B 19/414, H02P 5/52

(54) **Verfahren und elektrisches Antriebssystem zur Synchronisierung mehrerer bewegbarer Funktionsteile in Maschinen**
Process and electrical drive system for synchronising several mobile functional pieces in machines
Procédé et système d'entraînement électrique destiné à la synchronisation de plusieurs pièces fonctionnelles mobiles dans des machines

(43) Veröffentlichungstag der Anmeldung: 25.08.2010
(73) Patentinhaber: Baumüller Anlagen-Systemtechnik GmbH & Co. KG, 90482 Nürnberg (DE)
(72) Erfinder:
(74) Vertreter: Götz, Georg Alois

(56) Entgegenhaltungen:
- EP-A- 1 772 263
- WO-A-2004/028805
- DE-A1-102005 004 972
- DE-A1-102005 045 456

## Beschreibung

Die Erfindung betrifft ein Verfahren zur Synchronisierung mehrerer bewegbarer Funktionsteile von Geräten oder Maschinen, insbesondere von drehbaren Walzen/Zylindern oder von verstellbaren Druckwerken oder Falzwerken in Druckmaschinen. Die Synchronisation erfolgt anhand der Position der Funktionsteile, beispielsweise deren Winkellage. Jedes Funktionsteil wird von je einer mehrerer elektrischer Antriebseinheiten angetrieben, welche zu ihrer Synchronisation mit einer Leitachssteuerung zum Austausch von Positions-, Geschwindigkeits- und/oder Beschleunigungswerten in Verbindung stehen. Ferner betrifft die Erfindung eine zur Durchführung dieses Synchronisierungsverfahrens geeignete Antriebsanordnung sowie die Verwendung dieser Antriebsordnung in einer Druckmaschine in Einzelantriebstechnik.

Aus EP 0 567 741 B2 ist eine Rotationsdruckmaschine bekannt, bei der der Falzapparat-Antrieb als Positionsreferenzgeber für eine Druckstellengruppe fest vorgegeben ist. Die Druckstellengruppe ist durch eine beliebige Zusammenfassung von Zylinder-Einzelantrieben und deren Antriebsreglern gebildet, wobei Letztere von einem diesem übergeordneten Antriebssystem der Druckstellengruppe koordiniert werden. Mehrere solcher Druckstellengruppen beziehen so ihre Positionsreferenz über einen gemeinsamen Datenbus vom Falzapparat mit gegenüber dem Antriebssystem separaten Einzelantrieb. Eine derartige, unveränderbare Festlegung eines einzigen Antriebs als Leitachse beziehungsweise Positionsmaster ergibt allerdings den Nachteil, dass nicht auf veränderte Randbedingungen und/oder Produktänderungen oder variierende Betriebszustände der Maschine reagiert werden kann.

Dem gegenüber wird Abhilfe durch eine Druckmaschinensteuerung (vgl. 1. DE-Zeitschrift "Deutscher Drucker" Nr.6/08.02.2001, Seite 13-15, "Ethernet und SERBAS für synchronisierte Antriebe" von Thomas A.Teska) geschaffen, bei der auf einer Leitebene Sollwerte generiert und an eine Vielzahl von winkelsynchronen Antrieben verteilt werden. Durch eine µs-genaue Synchronisation aller Antriebsregler im System können diese, jeder autark, gleichzeitig aus den vorgegebenen Sollwerten Antriebsstellwerte generieren und damit die Winkelsynchronität aller Antriebe und somit der Zylinder der Druckmaschine gewährleisten. Dabei ist es nicht mehr zwingend, dem Falzapparat-Antrieb die Rolle der Leitachse zu übertragen. Vielmehr können die Antriebe sich auch auf ein anderes Maschinenaggregat als Leitachse und auf dessen absolute Lage synchronisieren. Die WO 2004/028805 A1 offenbart ein Verfahren zum Antrieb einer Bearbeitungsmaschine und insbesondere einer Druckmaschine, bei dem die Winkellage eines einzelnen Antriebs als Leitachsposition verwendet und der Ausrichtung der anderen Antriebe zugrunde gelegt wird.

Der Erfindung liegt die Aufgabe zugrunde, ein Realisierungskonzept vorzuschlagen, nach welchem bei einer bereits in Betrieb genommenen Maschine mit mehreren, in ihrer Bewegung zueinander zu synchronisierenden Funktionsteilen flexibel auf Änderungen der Randbedingungen bzw. Produktänderungen oder Änderungen der Betriebszustände reagiert werden kann. Zur Lösung wird auf das in Patentanspruch 1 angegebene Synchronisierverfahren sowie auf die weiteren, diesem nebengeordneten bzw. unabhängigen Ansprüche mit einer Antriebsanordnung beziehungsweise einer Verwendung in einer Druckmaschine verwiesen. Optionale, vorteilhafte Ausgestaltungen der Erfindung ergeben sich aus den abhängigen Ansprüchen.

Erfindungsgemäß kann jeder beliebige Antrieb eines Verbunds als Leitachs- bzw. Referenzantrieb für diesen Verbund definiert werden. Die anderen Antriebe werden relativ zu diesem ausgewählten Referenzantrieb ausgerichtet. Bisher wurde der Lagewert eines Referenzantriebs an die Folgeantriebe als Sollwert übergeben. Es bestand also keine fest Kopplung zwischen den Leitachsantrieb und den Folgeantrieben. Gemäß Erfindung wird diese Kopplung aufgehoben. Ein beliebiger ausgewählter Antrieb stellt einmalig seine aktuelle Sollposition zur Verfügung. Alle anderen Antriebe des Verbunds synchronisieren sich auf diesen Positionswert. Dabei muss keinerlei Information vorliegen, von wem dieser Wert im Netzwerk zur Verfügung gestellt wurde. Eine feste bzw. dauerhafte Kopplung der Antriebseinheiten zur Leitachse ist nicht mehr erforderlich.

Mit der Erfindung lässt sich der Vorteil erzielen, dass durch die freie Wahl des Referenzantriebs innerhalb eines Antriebsverbunds die Antriebsregler an jede beliebige Maschinenkonfiguration angepasst werden können. Diese Flexibilität ist beispielsweise im Zeitungs-Druckmaschinenbau wünschenswert. Änderungen der Randbedingungen bzw. Betriebszustände oder der herzustellenden Produkte können leicht zu komplizierteren Synchronisiervorgängen beim Maschinen-Anlauf führen, denen mit einem gemäß Erfindung effizient änderbarem Referenzantrieb leicht begegnet werden kann.

Insbesondere ist mit der Erfindung nun der Weg eröffnet, frei auszuwählen, welcher Antrieb bei der Synchronisierung nicht bewegt werden soll. Alle anderen Antriebe werden dann relativ zu diesem stillgehaltenen Antrieb ausgerichtet.

Auf der Basis der Erfindung ist eine weitere Flexibilisierung der Antriebskonfiguration dahingehend eröffnet, dass an der Übermittlung der mehreren Einzelachs-Positionen an die Leitachssteuerungen einzelne, ausgewählte Antriebe bzw. Antriebseinheiten nicht teilnehmen. In der Praxis der Maschinen gibt es bestimmte Arten von Antrieben, insbesondere sogenannte, an sich bekannte Hilfsantriebe, bei denen das Senden von Einzelachs-Positionen bzw. -referenzen nicht notwendig bzw. nicht erwünscht ist. Der damit erzielte Vorteil besteht beispielsweise in einer Entlastung eines Busses für Steuerungsdaten oder eines sonstigen Kommunikationssystems. Gleichwohl ist es bei diesen "unidirektionalen" Antriebseinheiten zweckmäßig, diese mit Leitachs-Positionswerten von der Leitachssteuerung aus zu versorgen.

Um die Belastung der Leitachssteuerung mit Datenverkehr insbesondere aufgrund des Empfangs von Einzelachs-Positionswerten zu minimieren und die Zuverlässigkeit der Datenübertragung zu erhöhen, ist nach einer optionalen Erfindungsausbildung vorgesehen, dass mehrere Antriebseinheiten mit einer (zwischengeschalteten) Antriebssteuerung kommunizieren. In weiterer Ausbildung lassen sich die Einzelachs-Positionswerte der Antriebseinheiten in der Antriebssteuerung zusammenfassen, vorzugsweise nach einer Vektor-Struktur. Es lässt sich so ein Achsreferenzvektor bilden und an die Leitachssteuerung mit übersichtlicher, leicht verarbeitbarer Datenstruktur übertragen.

Bei einem Produktionsanlauf, für den eine Vielzahl von Antriebseinheiten mit Antriebsregelkreisen für den Synchronisationsvorgang gestartet werden, sind ruckartige Verstellbewegungen bzw. Stellwert-Sprünge zu vermeiden. Diese würden den Synchronisationsvorgang behindern bzw. verzögern und die Betriebszuverlässigkeit und -sicherheit beeinträchtigen. Dem wird mit einer besonderen Erfindungsausbildung dahingehend begegnet, dass in Antriebseinheiten mit lokalen Regelkreisen zunächst - vor dem eigentlichen Synchronisationsvorgang - von Positionsgebern eine Ist-Position abgefragt wird. Auf deren Basis wird dann eine Soll-Position vorzugsweise derart berechnet, dass beim Anlauf jedenfalls keine Regeldifferenz besteht, welche die vorgenannten Nachteile verursachen würde. In weiterer Erfindungsausgestaltung kann eine als Referenz-Antrieb parametrisierte Antriebseinheit einen Leitachs-Positionswert berechnen, der mit der vorgenannten Sollposition nicht identisch zu sein braucht und an die Leitachssteuerung übertragen und von letzterer an die übrigen Antriebseinheiten verteilt wird. Damit lässt sich der Vorteil erzielen, dass weitere maschinenspezifische Parameter wie Geberauflösung, mechanische und virtuelle Getriebe sowie lokale mechanische Nullpositionen in die Berechnung des Soll-Positionswerts bzw. des Leitachs-Positionswerts zweckmäßig einfließen können. Im Rahmen der Erfindung können die genannten Berechnungen für den Leitachs-Positionswert natürlich auch in der Leitachssteuerung implementiert sein.

Indem bei der erfindungsgemäßen Antriebsanordnung lediglich die als Leitachse ausgewählte Antriebseinheit nur durch Parametrierung als solche gekennzeichnet zu werden braucht, lässt sich die Hardware-Vereinfachung bzw. -Einsparung erzielen, dass etwaige Antriebsregler der Antriebseinheiten oder Letztere selbst alle identisch realisiert sein können.

Weitere Einzelheiten, Merkmale, Merkmalskombinationen, Vorteile und Wirkungen auf der Basis der Erfindung ergeben sich aus der nachfolgenden Beschreibung bevorzugter Ausführungsbeispiele der Erfindung und aus den Zeichnungen. Diese zeigen jeweils mit schematischer Blockdarstellung in:

Figur 1: ein erstes Synchronisations-Antriebssystem mit vollständig bidirektionaler Übertragung von Achspositionsdaten zwischen Leitachssteuerung und lokalen Antriebseinheiten

Figur 2: ein zweites Synchronisations-Antriebssystem teilweise mit nur unidirektionaler Übertragung von Achspositionsdaten zwischen der Leitachssteuerung und einer der lokalen Antriebseinheiten

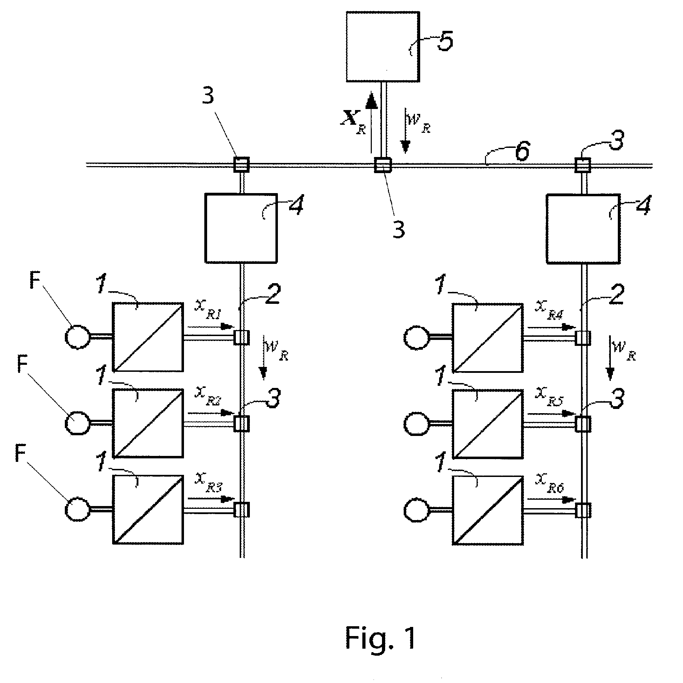

Gemäß Figur 1 sind eine Mehrzahl elektrisch-mechanischer Wandler bzw. Antriebseinheiten 1 einerseits mit je einem Funktionsteil F (beispielsweise translatorisch bzw. linear oder rotatorisch verstellbare Maschinenteile, oder Druckzylinder oder Falzapparat einer Druckmaschine) mechanisch verbunden und andererseits mit einem Antriebsbus 2 über jeweilige Busanschaltungen 3 datentechnisch gekoppelt. Der Antriebsbus 2 wird von einer Antriebssteuerung 4 beispielsweise in der Rolle als Busmaster dominiert. Gemäß Ausführungsbeispiel der Figur 1 sind zwei solcher identischer Busstrukturen jeweils mit einer eigenen Antriebssteuerung 4 angeordnet bzw. gezeichnet. Die Antriebssteuerungen 4 sind jeweils mit einem gegenüber den beiden Antriebsbussen 2 entkoppelten Steuerungsbus 6 ebenfalls über eine jeweilige Busanschaltung 3 parallel verbunden. Mit dem Steuerungsbus 6 ist ebenfalls über eine Busanschaltung 3 noch eine Leitachssteuerung 5 datentechnisch gekoppelt.

Die Funktionsweise ist wie folgt: Für jede Achse bzw. jedem Funktionsteil F wird von einem Lageregelkreis der zugeordneten Antriebseinheit 1 eine Ist-Position von einem (nicht gezeichnetem) Lagegeber abgefragt. Der Positionswert wird als Rückkopplung für den Lageregelkreis benötigt. Aus der in der Antriebseinheit 1 abgefragten Ist-Position wird im Zuge der Initialisierung jeder Antriebseinheit 1 darin lokal eine Soll-Position berechnet. Die SollPositionen werden als Einzelachs-Positionswerte x_{R1...}x_{R6} über den jeweiligen Antriebsbus an je eine der beiden Antriebssteuerungen 4 übermittelt. Aus Gründen effizienter Organisation der Datenübertragung findet in den Antriebssteuerungen 4 eine Formatierung beispielsweise zu einem Achsreferenz- bzw. Achspositionsvektor X_{R} statt. Letzterer wird über den Steuerungsbus 6 der Leitachssteuerung 5 zugeleitet. Darin wird mittels implementierter Auswertesoftware und/oder von extern eingegebener Benutzeranforderung ein Einzelachs-Positionsdatum einer bestimmten Antriebseinheit 1 bzw. eines bestimmten Funktionsteiles F frei ausgewählt. Entsprechend dieser Auswahl wird - gegebenenfalls nach weiterer Verarbeitung, Bewertung und/oder Gewichtung - ein Leitachs-Referenz- bzw. Leitachspositionsdatum w_{R} generiert und über den Steuerungsbus 6 zunächst an die Antriebssteuerungen 4 übermittelt, welche das Leitachspositionsdatums w_{R}, gegebenenfalls umformatiert, auf den ihnen jeweils zugeordneten Antriebsbus 2 senden. Darüber kann jede Antriebseinheit 1 die Leitachsposition empfangen und für den eigenen, lokalen Lageregelkreis verwenden. Zweckmäßig melden alle Antriebseinheiten den erfolgreichen Empfang des Leitachs-Positionsdatum w_{R} auf den Antriebsbus 2, woraufhin die jeweilige Antriebssteuerung 4 mit einem Statuswort den erfolgreichen Abschluss der Synchronisation an die Leitachssteuerung 5 rückmeldet.

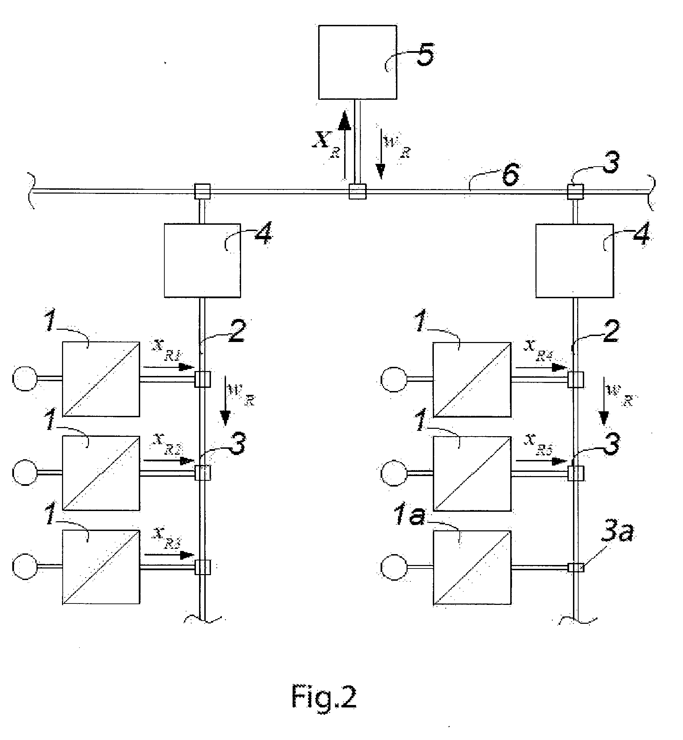

Das Ausführungsbeispiel gemäß Figur 2 unterscheidet sich von dem nach Figur 1 dadurch, dass eine benutzerspezifisch selektierte Antriebseinheit 1a am Antriebsbus 2 unidirektional mit einer Datenübertragungsrichtung einzig von der Antriebssteuerung 4 oder der übergeordneten Leitachssteuerung 5 zum Eingang der selektierten Antriebseinheit 1a angekoppelt ist. Die zugeordnete Busanschaltung 3a kann für diese unidirektionale Datenübertragungsrichtung spezifisch ausgelegt oder programmiert sein, so dass beispielsweise ein Schreiben eines Einzelachs-Positionswertes der selektierten Antriebseinheit 1a auf den Antriebsbus unterbunden bzw. gesperrt ist. Dadurch wird eine Minderung bzw. Entlastung der Datenverkehrsdichte und eine Minderung der Datenübertragungsgeschwindigkeit an den Antriebsbus 2 verhindert bzw. erreicht.

### Bezugszeichenliste

- 1: Antriebseinheiten
- F: Funktionsteil
- 1a: Antriebseinheit ohne Übertragung einer Einzelachsposition
- 2: Antriebsbus
- 3, 3a: Busanschaltungen
- 4: Antriebssteuerung
- 5: Leitachssteuerung
- 6: Steuerungsbus
- x_{R1...R6}: Einzelachs-Positionswerte
- X_{R}: Achspositionsvektor
- w_{R}: Leitachsposition bzw. -referenz

## Patentansprüche

1. Verfahren zur Synchronisierung mehrerer bewegbarer Funktionsteile (F) von Geräten oder Maschinen, insbesondere von Druckmaschinen, anhand ihrer Position, wobei jedes Funktionsteil (F) von je einer mehrerer elektrischer Antriebseinheiten (1) angetrieben wird, welche mit einer Leitachssteuerung (5) zum Austausch von Positions-, Geschwindigkeits- und/oder Beschleunigungswerten gekoppelt sind, mit einer Kombination folgender Schritte:
a) die Antriebseinheiten (1) übermitteln an die Leitachssteuerung (5) ihre Einzelachs-Positionen (x_{R1},x_{R2},...)
b) über die Leitachssteuerung (5) wird mittels darin implementierter Auswertesoftware und/oder von extern eingegebener Benutzeranforderung ein Funktionsteil (F) mit zugeordneter Antriebseinheit (1) als Leitachse für die anderen Funktionsteile (F) und/oder deren Antriebseinheiten (1) ausgewählt
c) von der Leitachssteuerung (5) wird einmalig anhand der als Leitachse ausgewählten Einzelachs-Position (x_{R1},x_{R2},...) eine Leitachsposition (w_{R}) erzeugt und an die Antriebseinheiten (1) übermittelt
**dadurch gekennzeichnet, dass**
d) in den Antriebseinheiten (1) ein jeweiliger Versatz zur Leitachsposition (w_{R}) bestimmt, und das jeweils zugehörige Funktionsteil (F) entsprechend dem Versatz verstellt oder ausgerichtet werden.

2. Verfahren nach Anspruch 1, **dadurch gekennzeichnet, dass** im Schritt d) das für die Leitachse ausgewählte Funktionsteil (F) beziehungsweise die ihm zugeordnete Antriebseinheit (1) stillgehalten beziehungsweise nicht bewegt werden.

3. Verfahren nach Anspruch 1 oder 2, **dadurch gekennzeichnet, dass** im Schritt a) eine oder mehrere der Antriebseinheiten (1) bezüglich der Kommunikation von Einzel- und Leitachspositionen (x_{R1},x_{R2},..., w_{R}) als unidirektionale Empfänger dergestalt verwendet werden, dass die Übermittlung ihrer Einzelachs-Positionen (w_{R}) an die Leitachssteuerung unterbunden wird und/oder nicht implementiert ist.

4. Verfahren nach Anspruch 1, 2 oder 3, **dadurch gekennzeichnet, dass** die jeweilige Antriebseinheit mittels Parametrierung als die Leitachse bildende Antriebseinheit, als stillzuhaltende Antriebseinheit und/oder als bezüglich Achspositionswerten unidirektionaler Empfänger (1a) konfiguriert wird.

5. Verfahren nach einem der vorangehenden Ansprüche, **dadurch gekennzeichnet, dass** mehrere Antriebseinheiten (1)mit einer Antriebssteuerung (5) kommunizieren, worin die jeweiligen Einzelachs-Positionen (x_{R1},x_{R2},...) der Antriebseinheiten (1) empfangen und zusammen gefasst beziehungsweise geordnet als Achspositions- beziehungsweise -referenzvektor (X_{R}) an die Leitachssteuerung (5) weitergeleitet werden, und darin der Achspositionszvektor (X_{R}) zur Auswahl beziehungsweise Bestimmung der Leitachsposition (w_{R}) ausgewertet wird.

6. Verfahren nach einem der vorangehenden Ansprüche, **dadurch gekennzeichnet, dass** in den Antriebseinheiten (1) jeweils im Rahmen eines lokalen Lageregelkreises eine Ist-Position abgefragt und davon abhängig eine Soll-Position berechnet und als die Einzelachs-Position (X_{R1},X_{R2},...,X_{R}) an die Leitachssteuerung (5) übermittelt wird.

7. Elektrische Antriebsanordnung zur Synchronisierung mehrerer Funktionsteile (F) von Geräten oder Maschinen, insbesondere von Druckmaschinen, anhand ihrer Position, mit mehreren elektrischen Antriebseinheiten (1), welche mit jeweils einem der Funktionsteile (F) zu deren Antrieb koppelbar sind, und mit einer Leitachssteuerung (5), mit der die Antriebseinheiten (1) zwecks Austausch von Positions-, Geschwindigkeits- und/oder Beschleunigungswerten in Kommunikation stehen, insbesondere geeignet zur Durchführung des Synchronisierverfahrens nach einem der Ansprüche 1 - 5, wobei zumindest mehrere der Antriebseinheiten (1) und die Leitachssteuerung (5) programm- und/oder schaltungstechnisch zu einer bidirektionalen Datenkommunikation mit folgenden Funktionen eingerichtet und/oder ausgebildet sind:
a) eine Anzahl der Antriebseinheiten (1) übermitteln ihre jeweiligen Einzelachs-Positionen (x_{R1},x_{R2},...) an die Leitachssteuerung (5),
b) über die Leitachssteuerung (5) werden mittels darin implementierter Auswertesoftware und/oder von extern eingegebener Benutzeranforderung die Einzelachs-Positionen (x_{R1},x_{R2},...) zur Auswahl und Bestimmung einer Leitachsposition (w_{R}) ausgewertet
c) die Leitachssteuerung (5) übermittelt die Leitachsposition (w_{R}) an alle Antriebseinheiten (1)
**gekennzeichnet durch** die weitere Funktion:
d) in den Antriebseinheiten (1) wird jeweils ein Versatz zur Leitachsposition (w_{R}) bestimmt, und ein dem jeweiligen Funktionsteil (F) zugeordneter Motor wird zur Umsetzung des Versatzes in eine Verfahrbewegung angesteuert.

8. Antriebsanordnung nach Anspruch 7, **gekennzeichnet durch** eine identische Realisierung der Antriebseinheiten (1) oder etwa darin angeordneter Antriebsregler.

9. Antriebsanordnung nach Anspruch 7 oder 8, **dadurch gekennzeichnet, dass** wenigstens eine der Antriebseinheiten (1) programm- und/oder schaltungstechnisch bezüglich der Übertragung von Achspositionswerten (x_{R1},x_{R2},...,w_{R}) ausschließlich zum unidirektionalen Datenempfang der Leitachsposition (w_{R}) von der Leitachssteuerung (5) und/oder nicht zum Übermitteln ihrer Einzelachs-Position (x_{R1},x_{R2},...) an die Leitachssteuerung (5) ausgebildet ist.

10. Verwendung der Antriebsanordnung nach Anspruch 9 für eine Druckmaschine in Einzelantriebstechnik mit Falzapparat als Funktionsteil (F), **dadurch gekennzeichnet, dass** die dem Falzapparat zugeordnete Antriebseinheit (1a) programm- und/oder schaltungstechnisch bezüglich der Übertragung von Achspositionswerten (x_{R1},x_{R2},... ,x_{R}) ausschließlich zum unidirektionalen Datenempfang von Leitachspositionswerten (w_{R}) der Leitachssteuerung (5) und/oder nicht zum Übermitteln ihrer Einzelachsposition (x_{R1},x_{R2},...) an die Leitachssteuerung (5) ausgebildet ist.

## Claims

1. A method of synchronising a number of mobile functional parts (F) of devices or machines, in particular of printing machines, on the basis of their position, each functional part (F) being driven by one of a number of electrical drive units (1) which are coupled to a master axis control (5) for the exchange of position, speed and/or acceleration values, with a combination of the following steps:
a) the drive units (1) transmit their individual axis positions (x_{R1}, x_{R2}, ...) to the master axis control (5)
b) a functional part (F) with the assigned drive unit (1) is selected as a master axis for the other functional parts (F) and/or the drive units (1) of the latter by the master axis control (5) by means of evaluation software implemented therein and/or by an externally inputted user request
c) a master axis position (w_{R}) is generated once by the master axis control (15) on the basis of the individual axis position (x_{R1}, x_{R2}, ...) selected as the master axis and is transmitted to the drive units (1),
**characterised in that**
d) a respective offset to the master axis position (w_{R}) is determined in the drive units (1), and the respectively corresponding functional part (F) is adjusted or aligned according to the offset.

2. The method according to Claim 1, **characterised in that** in step d), the functional part (F) selected for the master axis or the drive unit (1) assigned to it are kept still or are not moved.

3. The method according to Claim 1 or 2, **characterised in that** in step a), as regards the communication of individual and master axis positions (x_{R1}, x_{R2}, ..., w_{R}), one or a number of the drive units (1) are used as unidirectional receivers such that transmission of their individual axis positions (w_{R}) to the master axis control is prevented and/or is not implemented.

4. The method according to Claim 1, 2 or 3, **characterised in that** the respective drive unit is configured by means of parametering as the drive unit forming the master axis, as the drive unit to be kept still and/or as a unidirectional receiver (1a) as regards axis position values.

5. The method according to any of the preceding claims, **characterised in that** a number of drive units (1) communicate with a drive control (5), wherein the respective individual axis positions (x_{R1}, x_{R2}, ...) of the drive units (1) are received, combined and ordered and are forwarded as an axis position or reference vector (X_{R}) to the master axis control (5), and in the latter the axis position vector (X_{R}) is evaluated in order to select or determine the master axis position (w_{R}).

6. The method according to any of the preceding claims, **characterised in that** within the drive units (1), in each case within the framework of a local position control loop, an actual position is requested and dependently upon this, a target position is calculated and is transmitted to the master axis control (5) as the individual axis position (x_{R1}, x_{R2}, ..., X_{R}).

7. An electrical drive arrangement for synchronising a number of functional parts (F) of devices or machines, in particular of printing machines, on the basis of their position, comprising a number of electrical drive units (1) which can each be coupled to one of the functional parts (F) in order to be driven, and comprising a master axis control (5) with which the drive units (1) communicate for the purpose of exchanging position, speed and/or acceleration values, and in particular are suitable for the implementation of the synchronising method according to any of Claims 1 - 5, at least a number of the drive units (1) and the master axis control (5) being set up and/or designed with programme and/or circuit technology to provide bi-directional data communication with the following functions:
a) a number of the drive units (1) transmit their respective individual axis positions (x_{R1}, x_{R2}, ...) to the master axis control (5),
b) the individual axis positions (x_{R1}, x_{R2}, ...) are evaluated by the master axis control (5) by means of evaluation software implemented within the latter and/or by an externally inputted user request in order to select and determine a master axis position (w_{R})
c) the master axis control (5) transmits the master axis position (w_{R}) to all of the drive units (1)
**characterised by** the additional function:
d) in the drive units (1) an offset to the master axis position (w_{R}) is determined in each case, and a motor assigned to the respective functional part (F) is actuated in order to convert the offset into a movement.

8. The drive arrangement according to Claim 7, **characterised by** an identical realisation of the drive units (1) or perhaps drive regulators arranged within the latter.

9. The drive arrangement according to Claim 7 or 8, **characterised in that** at least one of the drive units (1) is designed with programme and/or circuit technology, as regards the transmission of axis position values (x_{R1}, x_{R2}, ..., w_{R}), exclusively for the unidirectional data reception of the master axis position (w_{R}) from the master axis control (5) and/or not for transmitting its individual axis position (x_{R1}, x_{R2}, ...) to the master axis control (5).

10. Use of the drive arrangement according to Claim 9 for a printing machine in individual drive technology with a folding apparatus as a functional part (F), **characterised in that** the drive unit (1a) assigned to the folding apparatus is designed with programme and/or circuit technology, as regards the transmission of axis position values (x_{R1}, x_{R2}, ..., w_{R}) exclusively for the unidirectional data reception of master position values (w_{R}) from the master axis control (5) and/or not for transmitting its individual axis position (x_{R1}, x_{R2}, ...) to the master axis control (5).

## Revendications

1. Procédé de synchronisation de plusieurs pièces fonctionnelles (F) mobiles dans des appareils ou machines, notamment des machines à imprimer, sur la base de leur position, chaque pièce fonctionnelle (F) étant entraînée par une correspondante parmi plusieurs unités d'entraînement électriques (1) reliées à une commande d'axe pilote (5) pour l'échange de données concernant la position, la vitesse et/ou l'accélération, avec la combinaison des étapes suivantes :
a) les unités d'entraînement (1) transmettent à la commande d'axe pilote (5) leur position d'axe individuel (x_{R1}, x_{R2}, ...),
b) par le biais de la commande d'axe pilote (5), à l'aide d'un logiciel d'exploitation y implémenté et/ou d'une demande d'utilisateur entrée de l'extérieur, une pièce fonctionnelle (F) avec l'unité d'entraînement correspondante (1) est sélectionnée comme axe pilote pour les autres pièces fonctionnelles (F) et/ou leurs unités d'entraînement (1),
c) par la commande d'axe pilote (5), sur la base de la position de l'axe individuel (x_{R1}, x_{R2}, ...) sélectionnée comme axe pilote, une position d'axe pilote (w_{R}) est engendrée une fois et transmise aux unités d'entraînements (1),
**caractérisé en ce que**
d) dans les unités d'entraînement (1), un décalage respectif par rapport à la position d'axe pilote (w_{R}) est déterminé et la pièce fonctionnelle respective associée (F) est décalée ou ajustée selon le décalage.

2. Procédé selon la revendication 1, **caractérisé en ce qu'**à l'étape d), la pièce fonctionnelle (F) sélectionnée pour l'axe pilote ou l'unité d'entraînement (1) qui lui est associée, est arrêtée ou n'est pas faite tourner.

3. Procédé selon la revendication 1 ou 2, **caractérisé en ce qu'**à l'étape a), une ou plusieurs unités d'entraînement (1) sont utilisées concernant la communication de positions individuelles et d'axe pilote (x_{R1}, x_{R2}, ...w_{R}) comme des récepteurs unidirectionnels de façon que la transmission de leur positions d'axe individuel (w_{R}) à la commande d'axe pilote est empêchée et/ou n'est pas implémentée.

4. Procédé selon la revendication 1, 2 ou 3, **caractérisé en ce que** l'unité d'entraînement respective est configurée par paramétrage comme l'unité d'entraînement formant l'axe pilote, comme l'unité d'entraînement à arrêter et/ou comme récepteur unidirectionnel (1a) concernant des données de position d'axe.

5. Procédé selon l'une des revendications précédentes, **caractérisé en ce que** plusieurs unités d'entraînement (1) communiquent avec une commande d'entraînement (5), où les positions d'axe individuel respectives (x_{R1}, x_{R2}, ...) des unités d'entraînement (1) sont reçues et sont transmises de manière assemblée ou ordonnée, comme vecteur de position d'axe ou de référence (X_{R}) à la commande d'axe pilote (5) et où le vecteur de position d'axe (X_{R}) est exploité en vue de la sélection ou détermination de la position d'axe pilote (w_{R}).

6. Procédé selon l'une des revendications précédentes, **caractérisé en ce que**, dans les unités d'entraînement (1) dans le cadre d'une boucle locale de régulation de position, une position réelle est interrogée et, en fonction de celle-ci, une position à atteindre est calculée et est transmise comme position d'axe individuel (x_{R1}, x_{R2}, ..., X_{R}) à la commande d'axe pilote (5).

7. Agencement d'entraînement électrique pour la synchronisation de plusieurs pièces fonctionnelles (F) dans des appareils ou machines, notamment des machines à imprimer, sur la base de leur position, avec plusieurs unités d'entraînement électriques (1) qui peuvent être accouplées chacune à une des pièces fonctionnelles (F) pour l'entraînement de celles-ci, et avec une commande d'axe pilote (5) avec laquelle les unités d'entraînement (1) communiquent pour l'échange de données concernant la position, la vitesse et/ou l'accélération, agencement notamment adapté pour la mise en oeuvre du procédé de synchronisation selon l'une des revendications 1 à 5, où au moins plusieurs des unités d'entraînement (1) et la commande d'axe pilote (5) sont agencées et/ou conçues par programme et/ou par circuit avec les fonctions suivantes:
a) un nombre des unités d'entraînement (1) transmettent à la commande d'axe pilote (5) leur position d'axe individuel (x_{R1}, x_{R2}, ...),
b) par le biais de la commande d'axe pilote (5), à l'aide d'un logiciel d'exploitation y implémenté et/ou d'une demande d'utilisateur entrée de l'extérieur, les positions d'axe individuel (x_{R1}, x_{R2}, ...) sont exploitées pour la sélection et la détermination d'une position d'axe pilote (w_{R}),
c) la commande d'axe pilote (5) transmet la position d'axe pilote (w_{R}) à toutes les unités d'entraînement (1),
**caractérisé par** la fonction supplémentaire
d) dans les unités d'entraînement (1), un décalage respectif par rapport à la position d'axe pilote (w_{R}) est déterminé et un moteur associé à la pièce fonctionnelle respective (F) est mis en mouvement d'entraînement pour la mise en oeuvre du décalage.

8. Agencement d'entraînement selon la revendication 7, **caractérisé par** une réalisation identique des unités d'entraînement (1) ou des régulateurs d'entraînement éventuellement disposés dans elles.

9. Agencement d'entraînement selon la revendication 7 ou 8, **caractérisé en ce qu'**au moins une des unités d'entraînement (1) est conçue, en ce qui concerne la transmission de données de positions d'axe (x_{R1}, x_{R2}, ..., w_{R}), par programme et/ou par circuit, exclusivement pour une réception de données unidirectionnelle de la commande de l'axe pilote (5), de la position de l'axe pilote (w_{R}) et/ou non pas pour une transmission de sa position d'axe individuel (x_{R1}, x_{R2}, ...) à la commande de l'axe pilote (5).

10. Utilisation de l'agencement d'entraînement selon la revendication 9 pour une machine à imprimer en technique d'entraînement individuel avec un appareil de pliage comme pièce fonctionnelle (F), **caractérisée en ce que** l'unité d'entraînement associée à l'appareil de pliage (1a) est conçue par programme et/ou par circuit, exclusivement pour une réception de données unidirectionnelle de la commande de l'axe pilote (5), de la position de l'axe pilote (w_{R}) et/ou non pas pour une transmission de sa position d'axe individuel (x_{R1}, x_{R2}, ...) à la commande de l'axe pilote (5).
